# EUROPEAN PATENT SPECIFICATION

(11) **EP 4 484 779 B1**
(45) Date of publication and mention of the grant of the patent: **29.07.2026**
(21) Application number: 22928834.5
(22) Date of filing: 21.09.2022
(51) Int. Cl.: F16C 19/18, F16C 33/58, F16C 33/64, B60B 27/00

(54) **HUB UNIT BEARING**
RADNABENLAGER
PALIER D'UNITÉ FORMANT MOYEU

(30) Priority: 24.02.2022 JP 2022026689
(43) Date of publication of application: 01.01.2025
(73) Proprietor: NSK Ltd., Tokyo 141-8560 (JP)
(72) Inventor: KISHIDA, Akitsu, Fujisawa-shi, Kanagawa 251-8501 (JP)
(74) Representative: Grünecker Patent- und Rechtsanwälte PartG mbB
(86) International application number: PCT/JP2022/035266
(87) International publication number: WO 2023/162313

(56) References cited:
- JP-A- 2008 064 261
- JP-A- 2009 255 130
- JP-A- 2014 024 091
- JP-A- 2014 024 091
- JP-A- 2016 148 380
- JP-A- 2016 148 380
- JP-A- 2018 048 682
- JP-A- 2021 165 130

## Description

### TECHNICAL FIELD

The present invention relates to a hub unit bearing for rotatably supporting a wheel of an automobile with respect to a suspension device.

### BACKGROUND ART

In the related art, an outer ring of a hub unit bearing formed by forging is fastened and fixed to a knuckle by bolting from an inboard side of the knuckle when an insertion hole for inserting a knuckle bolt is a female screw, and is fastened and fixed to the knuckle by bolting from an outboard side when the insertion hole is a cylindrical hole.

For example, in the case of a wheel bearing device 100 described in Patent Literature 1 shown in FIG. 6, a hub wheel 101 includes a wheel mounting flange 102 extending radially outward from a cylindrical portion, and a wheel 105 and the hub wheel 101 are fixed to a hub bolt 103 inserted into a flange locking hole 104. Further, an outer ring 111 includes a vehicle body mounting flange 114 extending radially outward from an outer periphery of the cylindrical portion 112, and the outer ring 111 and a knuckle 117 are fixed by fastening a knuckle bolt 115 inserted into a flange locking hole 116, which is a cylindrical hole, to the knuckle 117.

In addition, in an outer ring for a rolling bearing unit described in Patent Literature 2, it is described that a rolling fatigue life of an outer ring raceway portion is improved by forging a metal material having high cleanliness so as to be exposed to a double row outer ring raceway portion of. Further, in Patent Literature 2, by performing forging molding so that a flash is emitted to an outer peripheral surface on an inboard side of the flange, a deformation resistance of an inboard side portion of the flange at the time of forging is lowered, a radius of curvature of a corner R portion on the inboard side becomes small, and a removal amount in finish cutting is reduced.

### CITATION LIST

### PATENT LITERATURE

Patent Literature 1: JP2020-85205A
Patent Literature 2: JP2015-107495A

JP 2014 024091 A discloses the features of the preamble of claim 1.

### SUMMARY OF INVENTION

### TECHNICAL PROBLEM

As described in Patent Literature 1, when the vehicle body mounting flange 114 is fixed to the knuckle 117 by the knuckle bolt 115, the vehicle body mounting flange 114 needs to have a seating surface on an outboard side surface 120 on which a head portion 115a of the knuckle bolt 115 can seat. Furthermore, when a fastening tool such as a socket is placed over the head portion 115a of the knuckle bolt 115, it is necessary to prevent the fastening tool from interfering with surroundings, such as an outer peripheral surface of the cylindrical portion 112. Therefore, in order to satisfy the above requirements without enlarging the vehicle body mounting flange 114, it is desirable to reduce an outer diameter of the outboard cylindrical portion 112 of the outer ring 111 and the radius of curvature of the corner R portion 121 between the outer peripheral surface of the cylindrical portion 112 and the outboard side surface 120 of the vehicle body mounting flange 114.

However, when cutting is performed on the outer peripheral surface of the cylindrical portion 112 in order to reduce the outer diameter of the outboard cylindrical portion 112 of the outer ring 111, there is a concern that a grain flow line is cut and strength of the corner R portion 121 on the outboard side decreases. Since a large load from the knuckle 117 is applied to the corner R portion 121 on the outboard side of the vehicle body mounting flange 114, strength is required.

The present invention has been made in view of the above-described problems, and an object thereof is to provide a hub unit bearing that can ensure a large area of an outboard side surface of the vehicle body mounting flange while maintaining the strength achieved by forging, without performing cutting on the outboard cylindrical portion of the outer ring.

### SOLUTION TO PROBLEM

The above object of the present invention is achieved by the following configuration.
[1] A hub unit bearing including:
   an outer ring including a cylindrical portion having an outer ring raceway on an inner peripheral surface and a vehicle body mounting flange extending radially outward from a periphery of the cylindrical portion and having a plurality of insertion holes through which knuckle bolts are inserted;
   a hub having an inner ring raceway at a position facing the outer ring raceway on an outer peripheral surface and a wheel mounting flange extending radially outward from a portion located on an outboard side of the outer ring; and
   a plurality of rolling elements rollably provided between the outer ring raceway and the inner ring raceway, in which
   a flash mark is formed on an outer peripheral surface of the vehicle body mounting flange on the outboard side.

### ADVANTAGEOUS EFFECTS OF INVENTION

According to the hub unit bearing of the present invention, a large area of an outboard side surface of the vehicle body mounting flange can be ensured while maintaining strength achieved by forging, without performing cutting on the outboard cylindrical portion of the outer ring.

### BRIEF DESCRIPTION OF DRAWINGS

FIG. 1 is a longitudinal sectional view of a hub unit bearing according to an embodiment of the present invention.
FIG. 2 is a left side view of an outer ring shown in FIG. 1 (a view seen from an outboard side).
FIG. 3 is a sectional view taken along line III-III in FIG. 2.
FIG. 4 is a left side view of an outer ring of a modification (a view seen from the outboard side).
FIG. 5 is a sectional view taken along line V-V in FIG. 4.

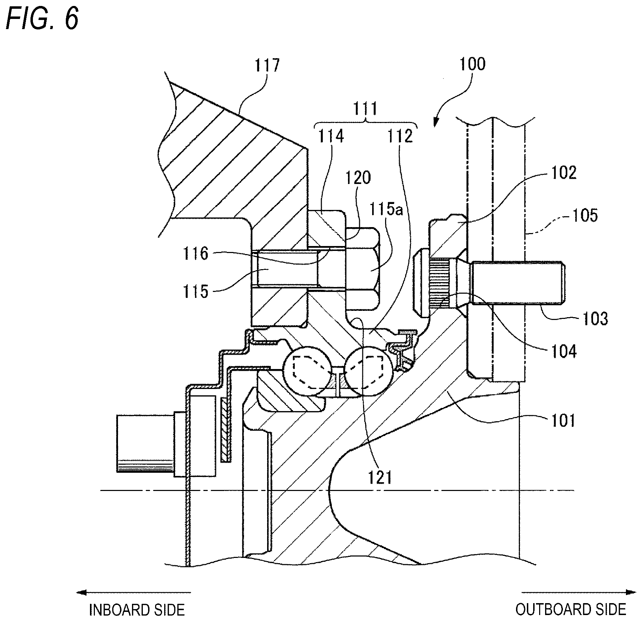

FIG. 6 is a longitudinal sectional view of a hub unit bearing in the related art.

### DESCRIPTION OF EMBODIMENTS

Hereinafter, embodiments of a hub unit bearing according to the present invention will be described in detail with reference to the drawings.

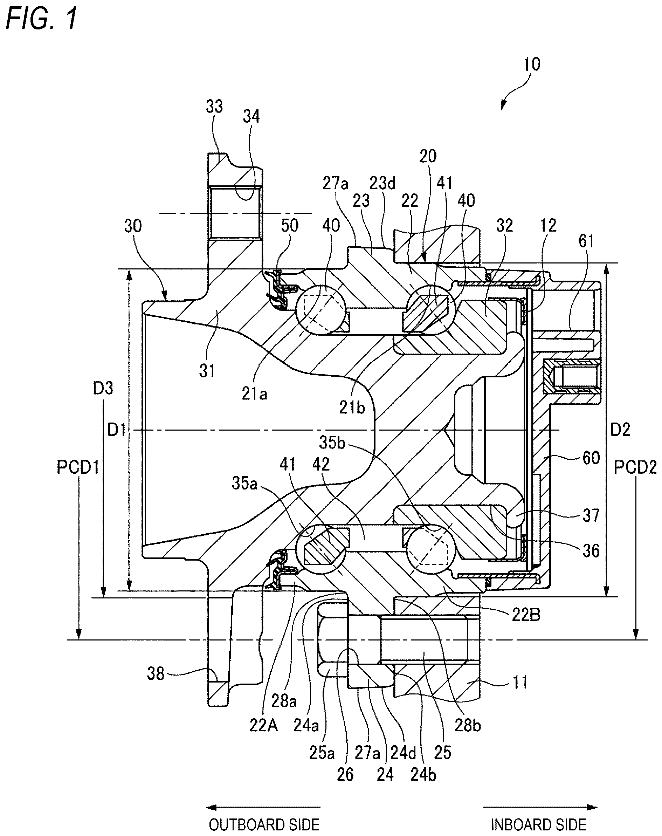

In the present specification and claims, the term "outboard side" in relation to an axial direction refers to a left side in FIG. 1, which is an outer side in a width direction of a vehicle body when assembled to an automobile, and conversely, a right side in FIG. 1, which is a center side in the width direction of the vehicle body, is referred to as the "inboard side" in the axial direction.

As shown in FIG. 1, a hub unit bearing 10 according to the present embodiment is for a driven wheel, and includes an outer ring 20, a hub 30, a plurality of rolling elements 40, a seal ring 50, and a cap 60.

The outer ring 20 includes a cylindrical portion 22 having a double row outer ring raceways 21a and 21b on an inner peripheral surface, an entire peripheral flange 23 formed over an entire outer periphery at an axially middle portion of the cylindrical portion 22, and four vehicle body mounting flanges 24 extending radially outward from positions spaced apart from each other in a circumferential direction of the entire peripheral flange 23. The number of vehicle body mounting flanges 24 is not limited to four, and may be, for example, three.

The vehicle body mounting flanges 24 are each formed with an insertion hole 26 through which a knuckle bolt 25 is inserted. During use, the outer ring 20 does not rotate while supported by a knuckle 11 by coupling and fixing the vehicle body mounting flange 24 to the knuckle 11 of a suspension device through the knuckle bolt 25.

The hub 30 is formed by coupling a hub wheel 31 and an inner ring 32, and is disposed coaxially (concentrically) with the outer ring 20 on an inner diameter side of the outer ring 20.

The hub wheel 31 is provided with a wheel mounting flange 33 having a circular ring shape and extending radially outward at a portion located further outboard (on the left side in FIG. 1) than an end portion of the outer ring 20 on the outboard side and for supporting and fixing a braking rotary member such as a wheel (driven wheel) and a disc rotor.

A stud bolt (not shown) is serrated and fitted into each of insertion holes 34 provided in the wheel mounting flange 33 to fix the braking rotary member (not shown) such as the wheel (driven wheel) and the disc rotor. Furthermore, the wheel mounting flange 33 is provided with a work hole 38 at a position corresponding to the insertion hole 26 of the vehicle body mounting flange 24, into which a fastening tool (for example, a socket) for fastening the knuckle bolt 25 can be inserted.

Additionally, an inner ring raceway 35a on the outboard side is provided on the outer peripheral surface of the hub wheel 31 in a portion opposing the outer ring raceway 21a on the outboard side provided on the inner peripheral surface of the outer ring 20. A small diameter step portion 36 is provided on the outer peripheral surface of the hub wheel 31 at an inboard end portion opposite the outer ring raceway 21b on the inboard side provided on the inner peripheral surface of the outer ring 20.

An inner ring raceway 35b on the inboard side is provided on the outer peripheral surface of the inner ring 32, and the inner ring 32 is positioned and fixed in the axial direction by a crimp portion 37 formed by crimping the inboard end portion of the hub wheel 31 radially outward in a state in which the inner ring 32 is fitted and fixed to the small diameter step portion 36 of the hub wheel 31 by interference fit.

A pitch circle diameter PCD1 of the plurality of work holes 38 is the same as a pitch circle diameter PCD2 of the plurality of insertion holes 26, and a diameter D3 of an inscribed circle of the plurality of work holes 38 has a size equal to or larger than a diameter D1 of an outer peripheral surface of an outboard cylindrical portion 22A. Accordingly, the fastening tool for fastening the knuckle bolt 25 can be easily inserted into the work hole 38 without interfering with the cylindrical portion 22, and workability is improved.

A plurality of rolling elements 40 are rotatably provided between the outer ring raceway 21a and the inner ring raceway 35a on the outboard side and between the outer ring raceway 21b and the inner ring raceway 35b on the inboard side while being held by a holder 41.

In the shown example, balls are used as the rolling elements 40, but in the case of a rolling bearing unit for supporting wheels of an automobile, which is heavy, tapered rollers may be used instead of the balls.

The seal ring 50 closes an opening of an outboard end of an internal space 42 in which the plurality of rolling elements 40 are provided, which is present between the inner peripheral surface of the outer ring 20 and the outer peripheral surface of the hub 30, in a state in which the seal ring 50 is supported and fixed to an outboard end portion of the outer ring 20.

The cap 60 is formed in a bottomed cylindrical shape and closes an opening at an inboard end of the outer ring 20 in a state assembled to the inboard end portion of the outer ring 20.

The encoder 12 is fitted and fixed to the inboard end portion of the inner ring 32 of the hub 30, and a sensor unit (not shown) is assembled to a holding portion 61 of the cap 60. A detection portion of the sensor unit is brought close to and opposite a detection target surface of the encoder 12, thereby making it possible to measure a rotation speed and the like of the hub 30. Since a structure of the sensor unit is not related to the present invention, detailed descriptions thereof will be omitted.

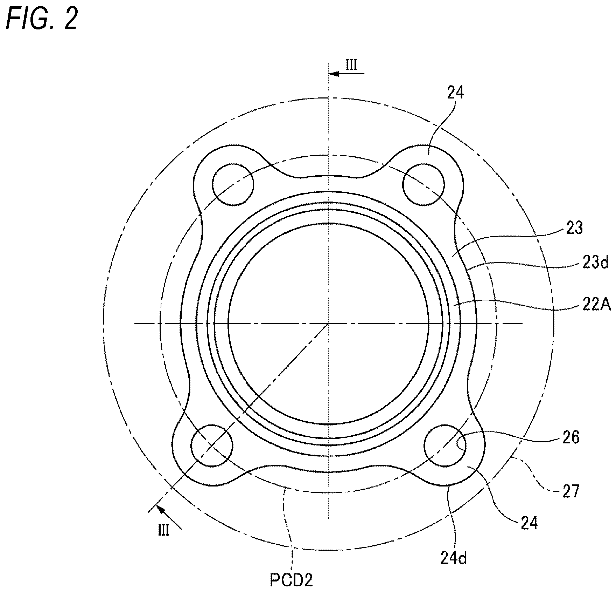

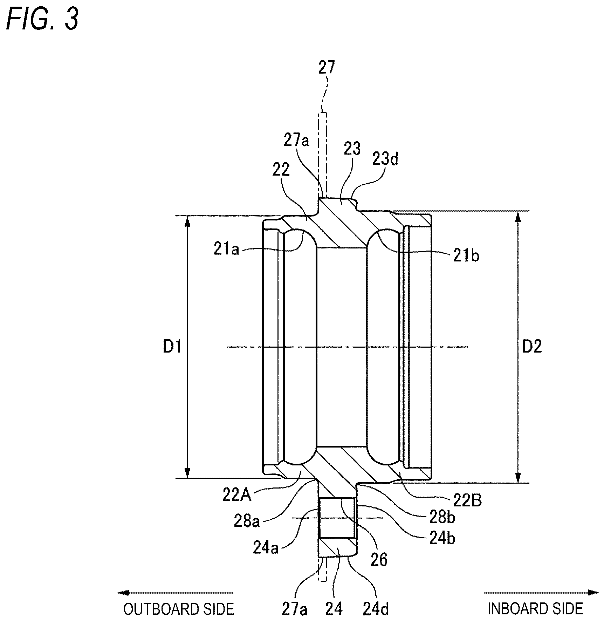

With reference to FIGS. 2 and 3, the cylindrical portion 22 of the outer ring 20 includes the outboard cylindrical portion 22A formed on the outboard side of the vehicle body mounting flange 24 and an inboard cylindrical portion 22B formed on the inboard side of the vehicle body mounting flange 24.

The diameter D1 of the outer peripheral surface of the outboard cylindrical portion 22A is formed to be smaller than a diameter D2 of an outer peripheral surface of the inboard cylindrical portion 22B. Furthermore, a radius of curvature of a corner R portion 28a, which has an arc-shaped sectional shape where an outboard side surface 24a of the vehicle body mounting flange 24 and the outer peripheral surface of the outboard cylindrical portion 22A intersect, is reduced, thereby increasing an area of the outboard side surface 24a of the vehicle body mounting flange 24.

Accordingly, a seating surface on which a head portion 25a of the knuckle bolt 25 for coupling and fixing the outer ring 20 to the knuckle 11 can be seated can be sufficiently secured on the outboard side surface 24a of the vehicle body mounting flange 24 (see FIG. 1). Further, when the fastening tool, for example, the socket is set to fasten the knuckle bolt 25, the fastening tool can be prevented from interfering with the outer peripheral surface of the outboard cylindrical portion 22A.

Since the outer ring 20 formed in this manner has strength that can withstand a load from the wheel, the outer ring 20 is molded by forging as in Patent Literature 2. In particular, in a molding process of the outer ring 20, semi-closed forging for forming the entire peripheral flange 23 and the vehicle body mounting flange 24 is performed on a billet after an upsetting process, and in the present embodiment, a flash 27, which is an extra material indicated by a phantom line in FIGS. 2 and 3, is formed on the outboard side of the outer peripheral surfaces 23d and 24d of the entire peripheral flange 23 and the vehicle body mounting flange 24. Since the flash 27 is removed by a trimming process, a flash mark 27a is formed on the outboard side of the outer peripheral surfaces 23d and 24d of the entire peripheral flange 23 and the vehicle body mounting flange 24 in the outer ring 20.

That is, by forming the flash 27 on the outboard side of the outer peripheral surfaces 23d and 24d of the entire peripheral flange 23 and the vehicle body mounting flange 24, a fluidity of a material on the outboard side during forging is improved, and the radius of curvature of the corner R portion 28a where the outboard side surface 24a of the vehicle body mounting flange 24 and the outer peripheral surface of the outboard cylindrical portion 22A intersect is reduced, thereby increasing the area of the outboard side surface 24a of the vehicle body mounting flange 24.

Accordingly, it is possible to secure a large area of the outboard side surface 24a of the vehicle body mounting flange 24 without cutting the outboard side surface 24a of the vehicle body mounting flange 24 or the outer peripheral surface of the outboard cylindrical portion 22A, in other words, without reducing the strength of the vehicle body mounting flange 24 by cutting a grain flow line on the outboard side.

Since a fluidity of the outboard side is increased, a fluidity of the inboard side is slightly reduced, and a radius of curvature of a corner R portion 28b where an inboard side surface 24b of the vehicle body mounting flange 24 and an outer peripheral surface of the inboard cylindrical portion 22B intersect may be increased.

However, even in a case where the corner R portion 28b is cut to reduce the radius of curvature, and the grain flow line is cut at the corner R portion 28b, the outer peripheral surface of the inboard cylindrical portion 22B is fitted to the knuckle 11, and thus, there is no problem of strength reduction. Since the diameter D2 of the outer peripheral surface of the inboard cylindrical portion 22B is larger than the diameter D1 of the outer peripheral surface of the outboard cylindrical portion 22A, that is a thickness of the inboard cylindrical portion 22B is greater than a thickness of the outboard cylindrical portion 22A, the strength of the inboard cylindrical portion 22B is ensured.

As described above, according to the hub unit bearing 10 of the present embodiment, a large area of the outboard side surface 24a of the vehicle body mounting flange 24 can be ensured while maintaining the strength achieved by forging, without performing cutting on the outboard cylindrical portion 22A of the outer ring 20.

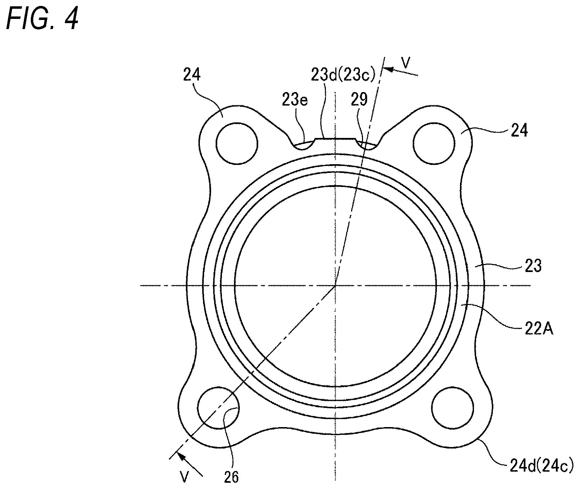

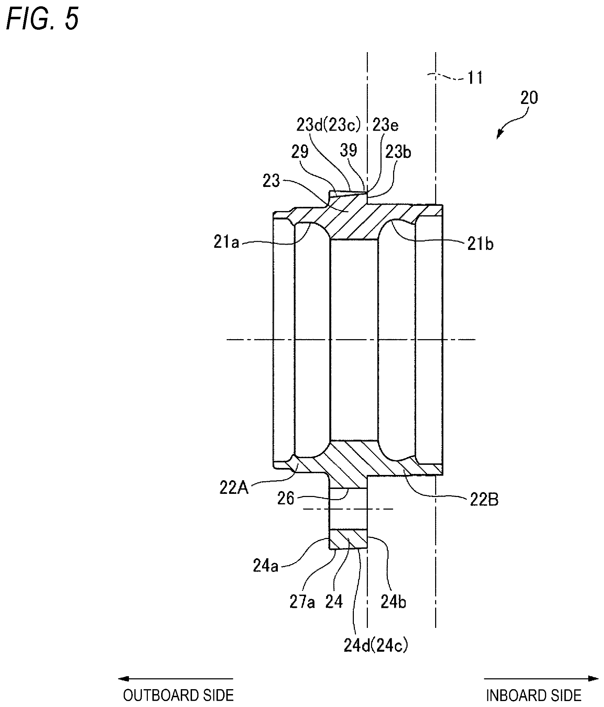

Next, an outer ring of a hub unit bearing according to a modification of the present embodiment will be described with reference to FIGS. 4 and 5.

As shown in FIGS. 4 and 5, as described above, the outer ring 20 of the present modification is also molded by a semi-closed forging die (not shown, and see, for example, FIG. 3 of JP2015-107459A (Patent Literature 2)) divided into two at positions on the outboard side of the entire peripheral flange 23 and the vehicle body mounting flange 24. Therefore, the outer peripheral surfaces 23d and 24d of the entire peripheral flange 23 and the vehicle body mounting flange 24 are inclined surfaces 23c and 24c that gradually decrease in diameter toward the inboard side, which is a draft.

When the outer ring 20 whose outer peripheral surfaces 23d and 24d are the inclined surfaces 23c and 24c is fixed to the knuckle 11 by the vehicle body mounting flange 24, an arc-shaped recess 39 (FIG. 5) having a V-shaped cross section in the axial direction is formed in which an arc-shaped contact edge portion between an edge portion 23e on the inboard side of the entire peripheral flange 23 (FIG. 4) located on an upper side and the knuckle 11 serves as a bottom portion.

In particular, when the vehicle body mounting flange 24 is four, both sides in the circumferential direction of the recess 39 are closed by the two vehicle body mounting flanges 24, and thus water adhering to the inclined surface 23c (outer peripheral surface 23d), which is an upper surface of the entire peripheral flange 23, flows to the inboard side through the inclined surface 23c and remains in the recess 39 to form a puddle. The water accumulated in the recess 39 may cause rust in the hub unit bearing 10 and the knuckle 11.

For this reason, in the outer ring 20 of the present modification, drain grooves 29 that gradually decrease in diameter from the edge portion 23e on the inboard side of the entire peripheral flange 23 positioned on the upper side or a position having a smaller diameter than the edge portion 23e toward the outboard side are provided on both sides in the circumferential direction of the inclined surface 23c. The drain groove 29 is preferably provided at a position facing each other on the inner side in the circumferential direction of the two vehicle body mounting flanges 24 adjacent to each other in the circumferential direction on the upper side, that is, at the lowest position of the recess 39 serving as a puddle. Accordingly, most of water flowing toward the inboard side can be discharged from the inclined surface 23c (outer peripheral surface 23d), and the cause of rust in the hub unit bearing 10 and the knuckle 11 can be eliminated. The drain groove 29 may have any shape and may be formed by cutting, but is preferably formed by additional forging.

Other parts other than those described above are the same as those of the hub unit bearing of the first embodiment, and therefore descriptions thereof will be omitted.

The present invention is not limited to the above-described embodiments and modifications, and modifications, improvements, and the like can be appropriately made.

For example, in the above embodiment, the vehicle body mounting flange extends radially outward from the entire peripheral flange, but the present invention is not limited thereto, and the vehicle body mounting flange may extend radially outward from the periphery of the cylindrical portion.

Further, the hub of the present invention is not limited to that of the above embodiment, and may be formed by a hub shaft and a pair of inner rings.

According to the configuration of claim 1, a large area of an outboard side surface of the vehicle body mounting flange can be ensured while maintaining strength achieved by forging, without performing cutting on the outboard cylindrical portion of the outer ring.

According to the configuration of claim 2, it is possible not only to ensure a large area of the outboard side surface of the vehicle body mounting flange, but also to increase a thickness of the inboard cylindrical portion.

According to the configuration of claim 3, the fastening tool for fastening the knuckle bolt can be easily inserted from the work hole of the wheel mounting flange, and workability is improved.

According tc the configuration of claim 4, the water flowing to the inboard side from the inclined surface formed on the outer peripheral surface of the entire peripheral flange positioned at the upper side and inclined toward the inboard side can be discharged to the outboard side, and the occurrence of rust in the hub unit bearing and the knuckle can be prevented.

The present application is based on a Japanese Patent Application (No. 2022-026689) filed on February 24, 2022.

### REFERENCE SIGNS LIST

10 hub unit bearing
20 outer ring
21a, 21b outer ring raceway
22A outboard cylindrical portion (cylindrical portion of outer ring)
22B inboard cylindrical portion (cylindrical portion of outer ring)
23 entire peripheral flange
23c inclined surface
23d outer peripheral surface of entire peripheral flange
23e edge portion
24 vehicle body mounting flange
24d outer peripheral surface of vehicle body mounting flange
25 knuckle bolt
26 insertion hole
27 flash
27a flash mark
29 drain groove
30 hub
33 wheel mounting flange
35a, 35b inner ring raceway
38 work hole
40 rolling element
D1 diameter of outboard cylindrical portion
D2 diameter of inboard cylindrical portion
D3 diameter of inscribed circle of work hole
PCD1, PCD2 pitch circle diameter

## Claims

1. A hub unit bearing (10) comprising:
an outer ring (20) including a cylindrical portion (22A, 22B) having an outer ring raceway (21a, 21b) on an inner peripheral surface and a vehicle body mounting flange (24) extending radially outward from a periphery of the cylindrical portion (22A, 22B) and having a plurality of insertion holes (26) through which knuckle bolts (25) are inserted;
a hub (30) having an inner ring raceway (35a, 35b) at a position facing the outer ring raceway (21a, 21b) on an outer peripheral surface and a wheel mounting flange (33) extending radially outward from a portion located on an outboard side of the outer ring (20); and
a plurality of rolling elements (40) rollably provided between the outer ring raceway (21a, 21b) and the inner ring raceway (35a, 35b), **characterized in that**
a flash mark (27a) is formed on an outer peripheral surface of the vehicle body mounting flange (24d) on the outboard side.

2. The hub unit bearing (10) according to claim 1, wherein
the cylindrical portion (22A, 22B) of the outer ring (20) is formed such that a diameter of an outer peripheral surface on the outboard side with respect to the vehicle body mounting flange (24) is smaller than a diameter of an outer peripheral surface on an inboard side with respect to the vehicle body mounting flange (24).

3. The hub unit bearing (10) according to claim 1 or 2, wherein
the wheel mounting flange (33) includes a plurality of work holes (38) into which a fastening tool for fastening the knuckle bolt (25) is capable of being inserted,
a pitch circle diameter (PCD1) of the plurality of work holes (38) is the same as a pitch circle diameter (PCD2) of the plurality of insertion holes (26), and a diameter (D3) of an inscribed circle of the plurality of work holes (38) is equal to or larger than a diameter (D1) of an outer peripheral surface of the cylindrical portion (22A, 22B) on the outboard side.

4. The hub unit bearing (10) according to any one of claims 1 to 3, wherein
the outer ring (20) includes a plurality of the vehicle body mounting flanges (24) extending radially outward from a periphery of an entire peripheral flange formed over an entire outer periphery of the cylindrical portion (22A, 22B), and
an outer peripheral surface (23d, 24d) of the entire peripheral flange (23) provided between the vehicle body mounting flanges (24) adjacent to each other in a circumferential direction on an upper side includes an inclined surface (23c, 24c) inclined to have a smaller diameter toward the inboard side, and a drain groove (29) having a smaller diameter toward the outboard side from an edge portion of the entire peripheral flange (23) on the inboard side or a position having a smaller diameter than the edge portion.

## Patentansprüche

1. Lager (10) einer Nabeneinheit, umfassend:
einen Außenring (20), der einen zylindrischen Abschnitt (22A, 22B) mit einer Außenring-Laufbahn (21a, 21b) an einer Innenumfangsfläche sowie einen Flansch (24) zum Montieren an einer Fahrzeugkarosserie einschließt, der sich von einem Umfang des zylindrischen Abschnitts (22A, 22B) radial nach außen erstreckt und eine Vielzahl von Einführöffnungen (26) aufweist, über die Achsschenkelbolzen (25) eingeführt werden;
eine Nabe (30) mit einer Innenring-Laufbahn (35a, 35b) an einer der Außenring-Laufbahn (21a, 21b) zugewandten Position an einer Außenumfangsfläche und einem Radmontageflansch (33), der sich von einem an einer außenliegenden Seite des Außenrings (20) befindlichen Abschnitt radial nach außen erstreckt; sowie
eine Vielzahl von Wälzkörpern (40), die zwischen der Außenring-Laufbahn (21a, 21b) und der Innenring-Laufbahn (35a, 35b) so angeordnet sind, dass sie rollen können,
**dadurch gekennzeichnet, dass**
ein Spritzgrat (flash mark) (27a) an einer Außenumfangsfläche des Flansches (24d) zum Montieren an einer Fahrzeugkarosserie an der außenliegenden Seite ausgebildet ist.

2. Lager (10) einer Nabeneinheit nach Anspruch 1, wobei
der zylindrische Abschnitt (22A, 22B) des Außenrings (20) so ausgebildet ist, dass ein Durchmesser einer Außenumfangsfläche an der außenliegenden Seite in Bezug auf den Flansch (24) zum Montieren an einer Fahrzeugkarosserie kleiner ist als ein Durchmesser einer Außenumfangsfläche an einer innenliegenden Seite in Bezug auf den Flansch (24) zum Montieren an einer Fahrzeugkarosserie.

3. Lager (10) einer Nabeneinheit nach Anspruch 1 oder 2, wobei
der Radmontageflansch (33) eine Vielzahl von Arbeitsöffnungen (38) einschließt, in die ein Anziehwerkzeug zum Anziehen des Achsschenkelbolzens (25) eingeführt werden kann,
ein Teilkreisdurchmesser (PCD1) der Vielzahl von Arbeitsöffnungen (38) der gleiche ist wie ein Teilkreisdurchmesser (PCD2) der Vielzahl von Einführöffnungen (26), und ein Durchmesser (D3) eines einbeschriebenen Kreises der Vielzahl von Arbeitsöffnungen (38) genauso groß ist wie oder größer als ein Durchmesser (D1) einer Außenumfangsfläche des zylindrischen Abschnitts (22A, 22B) an der außenliegenden Seite.

4. Lager (10) einer Nabeneinheit nach einem der Ansprüche 1 bis 3, wobei
der Außenring (20) eine Vielzahl der Flansche (24) zum Montieren an einer Fahrzeugkarosserie einschließt, die sich von einem Rand eines gesamten Umfangsflansches radial nach außen erstrecken, der über einen gesamten Außenumfang des zylindrischen Abschnitts (22A, 22B) ausgebildet ist, und
eine Außenumfangsfläche (23d, 24d) des gesamten Umfangsflansches (23), befindlich zwischen den Flanschen (24) zum Montieren an einer Fahrzeugkarosserie, die in einer Umfangsrichtung an einer Oberseite aneinandergrenzen, eine geneigte Fläche (23c, 24c), die so geneigt ist, dass sie zu der innen liegenden Seite hin einen kleineren Durchmesser hat, und eine Ablaufnut (29) einschließt, die einen kleineren Durchmesser in Richtung der außenliegenden Seite von einem Randabschnitt des gesamten Umfangsflansches (23) an der innenliegenden Seite oder einer Position mit einem kleineren Durchmesser als der Randabschnitt hat.

## Revendications

1. Roulement d'unité de moyeu (10) comprenant :
une bague externe (20) incluant une portion cylindrique (22A, 22B) ayant un chemin de roulement de bague externe (21a, 21b) sur une surface périphérique interne et une bride de montage de corps de véhicule (24) s'étendant radialement vers l'extérieur à partir d'une périphérie de la portion cylindrique (22A, 22B) et ayant une pluralité de trous d'insertion (26) à travers lesquels des boulons de porte-fusée (25) sont insérés ;
un moyeu (30) comportant un chemin de roulement de bague interne (35a, 35b) positionné face au chemin de roulement de bague externe (21a, 21b) sur une surface périphérique externe et une bride de montage de roue (33) s'étendant radialement vers l'extérieur à partir d'une portion située sur un côté externe de la bague externe (20) ; et
une pluralité d'éléments roulants (40) pourvus de manière roulante entre le chemin de roulement de bague externe (21a, 21b) et le chemin de roulement de bague interne (35a, 35b),
**caractérisé en ce qu'**une bavure de moulage (27a) est formée sur une surface périphérique externe de la bride de montage du corps de véhicule (24d) sur le côté externe.

2. Roulement d'unité de moyeu (10) selon la revendication 1, dans lequel
la portion cylindrique (22A, 22B) de la bague externe (20) est formée de telle sorte que le diamètre d'une surface périphérique externe sur le côté externe par rapport à la bride de montage du corps de véhicule (24) soit inférieur au diamètre d'une surface périphérique externe du côté interne par rapport à la bride de montage du corps de véhicule (24).

3. Roulement d'unité de moyeu (10) selon la revendication 1 ou 2, dans lequel
la bride de montage de roue (33) inclut une pluralité de trous de travail (38) dans lesquels un outil de fixation pour fixer le boulon de porte-fusée (25) peut être inséré,
le diamètre de cercle primitif (PCD1) de la pluralité de trous de travail (38) est le même que le diamètre de cercle primitif (PCD2) de la pluralité de trous d'insertion (26), et le diamètre (D3) d'un cercle inscrit de la pluralité de trous de travail (38) est supérieur ou égal au diamètre (D1) d'une surface périphérique externe de la portion cylindrique (22A, 22B) sur le côté externe.

4. Roulement d'unité de moyeu (10) selon l'une quelconque des revendications 1 à 3, dans lequel
la bague externe (20) inclut une pluralité de brides de montage du corps de véhicule (24) s'étendant radialement vers l'extérieur à partir de la périphérie entière d'une bride périphérique formée sur la périphérie externe entière de la portion cylindrique (22A, 22B), et
une surface périphérique externe (23d, 24d) de la bride périphérique entière (23) pourvue entre les brides de montage du corps de véhicule (24) adjacentes entre elles en direction circonférentielle sur un côté supérieur inclut une surface inclinée (23c, 24c) inclinée pour présenter un diamètre plus petit vers le côté interne, et une rainure de drainage (29) présentant un diamètre plus petit vers le côté externe à partir d'une portion de bord de la bride périphérique entière (23) sur le côté interne, ou à partir d'une position présentant un diamètre plus petit que la portion de bord.
